(19) Europäisches Patentamt
European Patent Office
Office européen des brevets

(11) Publication number: **0 373 313 A2**

(12) # EUROPEAN PATENT APPLICATION

(21) Application number: 89118724.7

(22) Date of filing: 09.10.89

(51) Int. Cl.[5]: C08F 218/08, C08F 210/02

(30) Priority: 14.11.88 US 270899

(43) Date of publication of application:
20.06.90 Bulletin 90/25

(84) Designated Contracting States:
BE DE FR GB IT NL SE

(71) Applicant: National Starch and Chemical Corporation
Finderne Avenue P.O. Box 6500
Bridgewater, N.J. 08807 (New Jersey)(US)

(72) Inventor: Shih, Yen-Jer
25 Mcafee Road
Somerset New Jersey 08873(US)

(74) Representative: Hagemann, Heinrich, Dr. et al
Patentanwälte Hagemann & Kehl Postfach 860329
D-8000 München 86(DE)

(54) **High solids vinyl acetate-ethylene emulsion polymers and the method of preparation.**

(57) High solids vinyl acetate-ethylene emulsions prepared in a colloid stabilized emulsion system containing a small amount of a water soluble, polymerizable vinyl monomer of the formula:

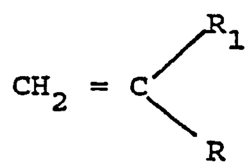

where R is selected from the group consisting of -CONHA, $-COO(CH_2)_zOH$, -COOH,

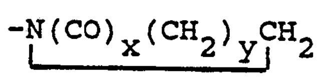

and $-SO_3Na$; x is 0 or 1; y is 2 to 4: z is 2 or 3; A is H, $-CH_2OH$ or $-C(CH_3)_2CH_2SO_3H$ or its neutralized salt; and $R_1$ is hydrogen or $CH_3$.

EP 0 373 313 A2

# HIGH SOLIDS VINYL ACETATE-ETHYLENE EMULSION POLYMERS AND THE METHOD OF PREPARATION

This invention is directed to high solids vinyl acetate-ethylene emulsions and to a method of preparation thereof.

Vinyl acetate polymeric emulsions, including those derived from copolymers of vinyl acetate and ethylene, are widely used industrially in many application areas such as packaging and adhesives. The techniques for polymerizing vinyl acetate and ethylene are well known and varied, with typical emulsion procedures disclosed in U.S. Pat. Nos. 3,708,388; 3,404,112; 3,714,099 and 4,164,489. While these polymeric materials possess many properties that make them suitable for use in a variety of applications, a need exists for a high solids polymer product that has low viscosity.

U.S. Pat. No. 3,708,388 discloses vinyl acetate-ethylene copolymers emulsions, made in the presence of a selected protective colloid, having a solids content of from 45 to 60% by weight and being useful in adhesive compositions. U.S. Pat. No. 4,590,238 discloses a high solids, i.e., 65 to 75% by weight, adhesive composition which is obtained by emulsion copolymerizing an acrylate ester with a selected hydrophilic vinyl monomer in the presence of an emulsifier mixture of a nonionic surfactant and an anionic surfactant.

In preparing an emulsion polymer, typically as solids content is increased, viscosity also increases, resulting in processing difficulties and deterioration of emulsion reheological properties. Accordingly, there is the need for providing ethylene-vinyl acetate emulsion polymers having a high solids content and suitable other properties, such as low viscosity, to make them attractive for new applications and which can be prepared without extreme processing difficulties in a non-complex procedure.

It has now been found that ethylene-vinyl acetate emulsion polymers having both high solids content and low viscosity can be prepared in a process using a protective colloid stabilizer and a small amount of a hydrophilic monomer. More particularly, this invention relates to the emulsion polymerization of vinyl acetate with ethylene in the presence of a protective colloid stabilizer and a small amount of a water soluble, vinyl polymerizable monomer of the formula:

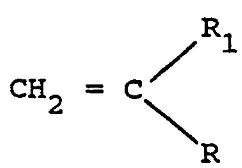

where R is selected from the group consisting of -CONHA, $-COO(CH_2)_zOH$, -COOH,

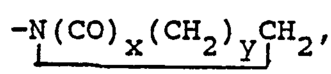

$-SO_3Na$; x is 0 or 1; y is 2 to 4; z is 2 or 3; A is H, $-CH_2OH$ or $-C(CH_3)_2CH_2SO_3H$ or its neutralized salt; and $R_1$ is H or $CH_3$.

The vinyl acetate-ethylene emulsion polymers prepared in accordance with this invention have particularly advantageous properties of high solids content of at least 60% and a relatively low viscosity of less than 5000 cps. These properties make such polymers useful in a variety of applications such as packaging and adhesives.

The vinyl acetate-ethylene emulsion polymers of this invention are prepared in a colloid stabilized emulsion system containing a small amount of a polymerizable, hydrophilic monomer. More particularly, the monomer is a water soluble, vinyl polymerizable monomer of the formula:

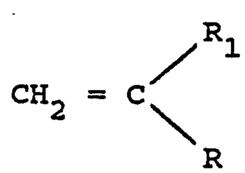

(I)

where R is selected from the group consisting of -CONHA, $-COO(CH_2)_zOH$, -COOH,

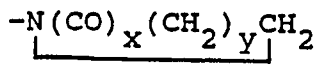

and $-SO_3Na$; x is 0 or 1; y is 2 to 4; z is 2 or 3; A is H, $-CH_2OH$ or $-C(CH_3)_2CH_2SO_3H$ or its neutralized salt; and $R_1$ is H or $CH_3$.

Preferred monomers (I) are those where R is $-CONH_2$, $-COOCH_2CH_2OH$ and $-SO_3Na$ and $R_1$ is H. Particularly preferred monomer is acrylamide.

The amount of monomer (I) used is this invention is relatively small. Although amounts of from about 0.1 to 10% by weight can be used, usually from about 0.3 to 5% is suitable and preferably from about 0.5 to 2% is used, based on the weight of polymer.

It is noted that the monomers (I) which are described above as particularly useful in this invention, may also include other substituents, in place of hydrogen on the vinyl group, or in place of R and $R_1$, as long as it remains polymerizable and water soluble.

The protective colloid used as a stabilizer in the emulsion polymerization, is any water soluble polymer or surface active substance that acts to make the emulsion stable by preventing the dispersed phase of the suspension from coalescing by forming a thin layer on the surface of each particle. In other words, it maintains the stability of the emulsion during polymerization and after. Useful protective colloids include polysaccharides, modified polysaccharides, e.g., modified starches and cellulose, natural and synthetic gums and polyvinyl alcohol and derivatives thereof. Particularly useful colloid stabilizers are the modified starches, especially hydrophobically modified starch; cellulose ethers, e.g., hydroxyethyl cellulose and carboxymethyl cellulose; and polyvinyl alcohol.

The modified starches useful herein include hydrophobic starch derivatives containing an ether, simple ester, or half-acid ester substituent with a saturated or unsaturated hydrocarbon chain of at least 5, preferably 5 to 22, carbon atoms.

By the term "hydrophobic starch" is meant a starch ether, simple ester or half-acid ester derivative wherein the ether, simple ester or half-acid ester substituent contains a saturated or unsaturated hydrocarbon chain of at least 5 carbon atoms. It should be understood that the hydrocarbon chain, which consists solely of carbon and hydrogen atoms, may contain some branching. It is preferred, however, to employ those starch derivatives wherein the hydrocarbon chain is unbranched. It should also be understood that the substituent may contain other groups in addition to the at least $C_5$ hydrocarbon chain as long as such groups do not interfere with the hydrophobic properties of the substituent.

By the term "simple ester" is meant an ester derived from a monofunctional acid (e.g., monocarboxylic or monosulfonic acid) which is distinguished from a "half-acid ester" having pendant carboxyl groups or acid radicals derived from an anhydride of a polycarboxylic acid.

The applicable starch bases which may be so modified include any amylaceous substance such as untreated starch, as well as starch derivatives including dextrinized, hydrolyzed, oxidized, esterified and etherified starches still retaining amylaceous material. The starches may be derived from any sources including, for example, corn, high amylose corn, wheat, potato, tapioca, waxy maize, sago or rice. The preferred starch sources are those high in amylopectin such as waxy maize and tapioca. Examples of suitable co-derivatization include acetylation, hydroxyalkylation, carboxymethylation, sulfoalkylation, and sulfosuccinoylation. Starch flours may also be used as a starch source.

Alkenyl succinate starches are the preferred hydrophobically modified starches used herein and are prepared by the reaction of alkenyl-succinic anhydrides (ASA) with either granular or dispersed starches. The preparation of the ASA reagents and the resulting starch derivatives are described in U.S. Patent 2,661,349 issued December 1, 1953 to Caldwell et al. The general reaction between ASA reagents and starch may be depicted as follows:

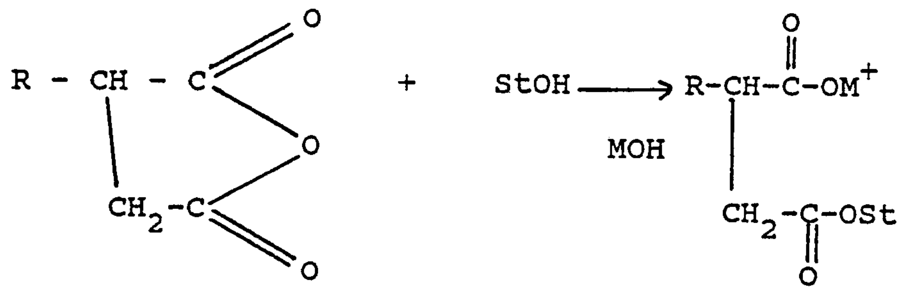


where St-O represents the polysaccharide fragment and M is a metal cation. The type of R group may be selected from branched or straight chain aliphatic substituents. R may thus be selected from the group consisting of $R'$-CH = CH-$CH_2$ -

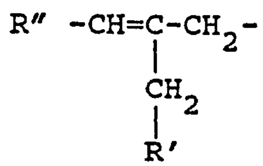

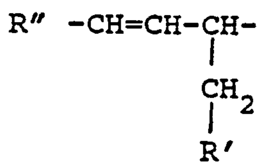

where $R'$ and $R''$ may be the same or different and are selected from the group consisting of $CH_3(CH_2)_n-$ where n = 1 to 20

The most common types of ASA reagents and the corresponding starch derivatives may be represented as follows:

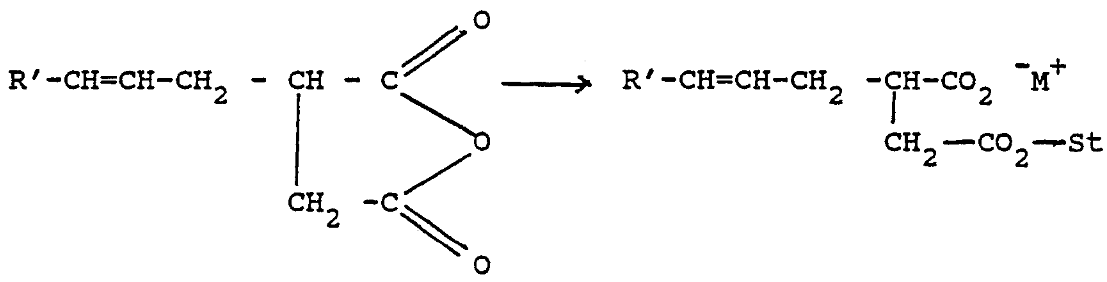

(I)

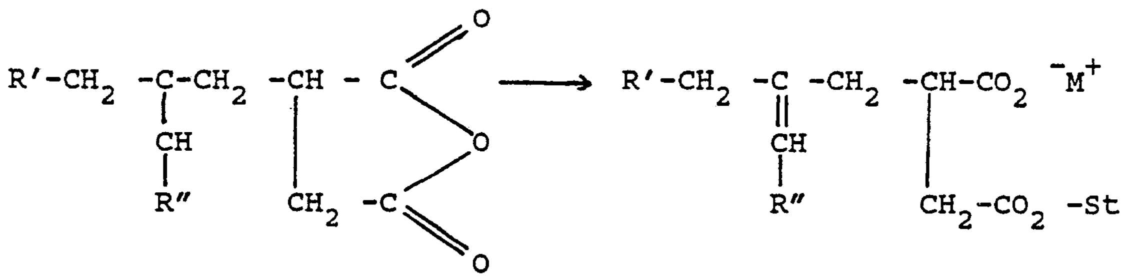

(II)

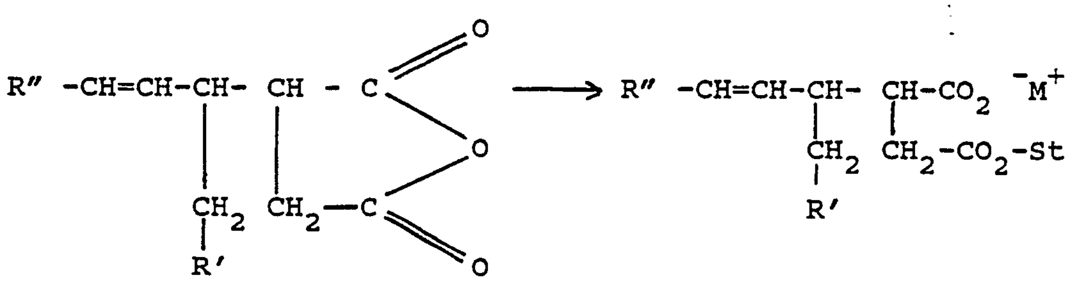

(III)

Another suitable class of reagents for preparing hydrophobically modified starches useful herein include the imidazolides or N,N′ disubstituted imidazolium salts of carboxylic or sulfonics such as described in U.S. Re 28,809 issued May 11, 1976 and U.S. Pat. 4,020,272 issued April 26, 1977, both to M. Tessler. Other useful reagents include the etherifying reagents, such as the reaction product of epihalohydrin with a tertiary amine, described in U.S. Pat. No. 2,876,217 issued March 3, 1959 to E. Paschall and the tertiary amine halides described in U.S. pat. No. 2,813,093 issued November 12, 1957 to C. Caldwell et al.

The starch etherification or esterification reactions may be conducted by a number of techniques known in the art and discussed in the literature, employing, for example, an aqueous reaction medium or organic solvent medium, or a dry heat reaction technique. See, for example, R. L. Whistler, Methods in Carbohydrate Chemistry, Vol. IV, 1964, pp. 279-311; R. L. Whistler et al., Starch: Chemistry and Technology, Second Edition, 1984, pp. 311-366; and R. Davidson and N. Sittig, Water-Soluble Resins, 2nd Ed., 1968, Chapter 2. The hydrophobically modified starch derivatives herein are preferably prepared employing an aqueous reaction medium at temperatures between 20° and 45° C.

For use herein, the starch derivatives may be produced either in gelatinized or ungelatinized form. The advantage of having the derivative in ungelatinized form is that it may be filtered, washed, dried and conveyed to the mill in the form of a dry powder.

When employing the cyclic dicarboxylic acid anhydride reagents, starch is preferably treated in granular form with the reagents in an aqueous alkali medium at a pH not lower than 7 nor higher than 11. This may be accomplished by suspending the starch in water, to which has been added (either before or after the addition of the starch) sufficient base such as alkali metal hydroxide, alkaline earth hydroxide, or ammonium hydroxide to maintain the mixture in an alkaline state during the reaction. The required amount of the reagent is then added, with agitation being maintained until the desired reaction is complete. Heat may be applied, if desired, in order to speed the reaction; however, if heat is used, temperatures of less than about

40 °C should be maintained. In a preferred method, the alkali and the anhydride reagent are added concurrently to the starch slurry, regulating the rate of flow of each of these materials so that the pH of the slurry remains preferably between 8 and 11. After completion of the reaction, the pH of the reaction mixture is adjusted to a value of from about 3 to 7 with any commercial acid such as hydrochloric, sulfuric, or acetic acid, and the like. The starch half-acid ester is then recovered by conventional techniques.

Due to greater hydrophobic nature of certain of the substituted cyclic dicarboxylic acid anhydride reagents useful herein (i.e., those have $C_{10}$ or higher substituents), the reagents react with starch in only minor amounts in standard aqueous reactions. In order to improve the starch reaction efficiency, starch is reacted with the hydrophobic reagent under standard aqueous conditions in the presence of at least 5%, preferably 7-15% (based on the weight of the reagent), of an organic quaternary salt which is employed as a phase transfer agent. The organic salts of which trioctylmethyl ammonium chloride and tricaprylmethyl ammonium chloride are preferably employed, are described in U.S. 3,992,432 issued November 16, 1976 to D. Napier et al.

The molecular weight of the applicable hydrophobically modified starch derivatives may be varied by performing the derivatization on the native starch. Alternatively, starches degraded to medium or lower molecular weights by acid hydrolysis, enzyme conversion or oxidative procedures may be employed. The preferred starch emulsifiers are acid-hydrolyzed and are derived from fluidity types in the range of 20-100 WF, more preferably 40-85 WF. WF refers to "Water Fluidity" and is a measure of the degree of degradation of the starch. The degree of hydrophobicity of the applicable starch derivatives may be changed by varying the type and chain length of the particular derivatizing reagent as well as the degree of substitution of the starch. It will be understood that the proportion of etherifying or esterifying reagent used will vary with the particular reagent chosen (since they naturally vary in reactivity and reaction efficiency), and the degree of substitution desired. As an example, the range of ASA treatment is 1-20% ASA reagent on the weight of the starch. The preferred ASA derivatives are in the treatment range of 3-10% and are derived from Type III ASA where $R'$ is $CH_3$- and $R''$ is $CH_3(CH_2)_n$-, n = 7-9; and from Type I reagent where $R'$ is $CH_3$-$(CH_2)_n$-, n = 5-9. In general, a starch derivative made with 1% of the reagent, based on the weight of the starch may be used; however, preferred ranges are on the order of about 5% to 10%.

It will be recognized that there is a wide design latitude in utilizing these hydrophobic starch derivatives as protective colloids. Thus, the molecular weight of the starch derivative may be varied to provide certain viscosity effects in the emulsion; the hydrophobic group nature and level can be varied to provide degrees of emulsification capability which will impact the particle size of the emulsion and the rate of polymerization. Further, the plant source from which the starch is derived as well as any ester or ether derivatization may be varied to produce certain rheological and adhesive properties in the final emulsion.

The primary monomer material used in the practice of this invention will comprise at least 50% by weight of vinyl acetate and from about 5% by weight of ethylene based on weight of the polymer. More particularly, from about 50 to 95% by weight of vinyl acetate and from about 5 to 49% by weight of ethylene will be used. Preferably, from about 65 to 95% of vinyl acetate and about 5 to 35% of ethylene and more preferably from about 70 to 90% vinyl acetate and about 10 to 30% by weight of ethylene, based on the weight of the polymer, are used.

The emulsions are prepared using conventional polymerization procedures wherein the monomers are polymerized in an aqueous medium in the presence of a protective colloid and a water soluble, vinyl polymerizable monomer using a free radical catalyst, the aqueous system being maintained by a suitable buffering agent, if necessary, at a pH of 2 to 7 under pressure of about 10 to 130 atmospheres. Polymerization procedures of this type are disclosed, for example, in U.S. Pat. Nos. 3,708,388; 3,404,112; 3,714,099 and 4,164,489.

If a batch process is used, the monomers are suspended in water and are thoroughly agitated while gradually heating to polymerization temperature. The homogenization period is followed by a polymerization period during which the catalyst, which consists of a main catalyst or initiator, and may include an activator, is added incrementally or continuously. If a semi-batch or slow addition procedure is followed, a portion of the ingredients are charged at the beginning with the balance of the charge being added gradually throughout the polymerization reaction. In either case, the polymerization is performed at conventional temperatures of from about 20° to 110 °C, preferably from about 45° to about 85 °C, for sufficient time to achieve a low monomer content, e.g., from about 0.5 to 10 hours, preferably from about 2 to 6 hours, to produce a latex having less than 1.5 percent, preferably less than 0.5 weight percent free monomer.

The ethylene content of the final copolymer depends on the ethylene content of the aqueous polymerization medium. Factors which control the ethylene content of the polymerization medium include the partial pressure of ethylene in the vapor phase over the medium, the temperature of polymerization and the degree of mixing between the vapor phase and the liquid medium. Generally, the polymerization is

performed at temperatures of about 45° to 85°C and at these temperatures, ethylene partial pressures from about 50 to 2000, preferably 250 to 1000 psig, are sufficient to incorporate from about 5 to 50 weight percent ethylene in the polymer. The reaction medium is preferably agitated with a stirrer, however, other agitation, such as sparging the liquid with recirculated ethylene from the vapor phase, can be used. In the preferred procedure, the ethylene partial pressure is maintained constant throughout the polymerization period so that this monomer is continuously supplied at a constant rate.

The polymerization is typically initiated by a free radical initiator such as water soluble peracid or salt thereof, e.g., hydrogen peroxide, peracetic acid, persulfuric acid or the ammonium and alkali metal salts thereof, e.g., ammonium persulfate, sodium peracetate, lithium persulfate, potassium persulfate, sodium persulfate, etc. Alternatively, organic peroxides such as benzoyl peroxide, t-butyl hydroperoxide, etc., may also be employed. A suitable concentration of the initiator is from about 0.05 to 5.0 weight percent and preferably from about 0.1 to 3 weight percent, based on the weight of the polymer.

The free radical initiator can be used alone and thermally decomposed to release the free radical initiating species or can be used in combination with a suitable reducing agent in a redox couple. The reducing agent is typically an oxidizable sulfur compound such as an alkali metal metabisulfite and pyrosulfite, e.g., sodium metabisulfite, potassium metabisulfite, sodium pyrosulfite and sodium formaldehyde sulfoxylate etc. The reducing agent can be employed throughout the copolymerization in an amount which generally varies from about 0.1 to 3 percent by weight based on the amount of polymer.

In order to maintain the pH range of the polymerization at between 2 to 7, it may be useful to work in the presence of customary buffer systems, for example, alkali metal acetates, alkali metal carbonates and alkali metal phosphates. Polymerization regulators or chain transfer agents such as mercaptans, aldehydes, chloroform, methylene chloride and trichloroethylene, can also be added in effective amounts, typically from about 0.1 to 3 percent by weight, based on the weight of polymer. Other additives, conventionally used in the art, such as surfactants and dispersing agents may be incorporated into the polymerization system if desired.

The colloid stabilizer may be used in the form of a cold water soluble powder, in which case it is added in powder form directly to the polymerization reactor. Alternatively, the stabilizer may be used in granular form, in which case it is generally slurried in water at a 10 to 40% solids level, jet-cooked or pressure-batch-cooked and added as a dispersion to the reactor. The colloid stabilizer is added at a total solids level of from about 1 to 10% by weight of the monomers, with the higher levels being required if batch polymerization procedures are employed. Amounts in excess of 10% could be used with the maximum amount dependent upon the desired viscosity, particle size and end use of the emulsion. The stabilizer can be added in its entirety, to the initial charge or a portion, e.g., from 25 to 90 percent thereof, can be added continuously or intermittently during polymerization.

The vinyl acetate-ethylene emulsion polymers prepared in accordance with this invention have high solids content of at least 60%, preferably at least 65% and a viscosity of less than 5000, preferably less than 2500 cps.

The following examples are further illustrative of this invention and are not intended to be construed as limitations thereof. In the examples, all parts are by weight and all temperatures in degrees Celsius, unless otherwise noted.

## EXAMPLE 1

This example illustrates the process of preparing high solids, colloid stabilized vinyl acetate-ethylene emulsions. In these examples the term "water fluidity" (WF) is a measure of the degree of degradation of the starch, when used, and is measured using a Thomas Rotational Shear-Type Viscometer (manufactured by Arthur H. Thomas Co., Philadelphia, PA 19016) in accordance with standard procedures such as are disclosed in U.S. Pat. No. 4,499,116 issued February 12, 1985 to G. A. Zwiercan et al. The Triton compounds used in the examples are ethoxylated alcohols and Tamol is an anionic, polymeric type dispersing agent, each available from Rohm & Haas Co.

The reaction was carried out in a 10 liter stainless steel reactor. The following charges were prepared:

(A) 1440 g - 3% octenyl succinic anhydride (OSA) modified 85 WF amioca starch (10%); 50.4 g Triton X-305 (70%); 176.4 g Triton X-301 (20%); 8 g sodium acetate: 2.5 g sodium formaldehyde sulfoxylate; 72 g acrylamide solution (50%), 3.6 g mercaptoacetic acid; 8 g Tamol 850 (25%); 10.8 g $FeSO_4$ $7H_2O$ (1% solution) and 450 g water;

(B) 3600 g vinyl acetate;

(C) 8.4 g t-butyl hydrogen peroxide, 312 g water;
(D) 8.4 g sodium formaldehyde sulfoxylate, 312 g water;
(E) 5 g t-butyl hydrogen peroxide, 5 g water;
(F) 5 g sodium formaldehyde sulfoxylate, 50 g water;

Charge A was adjusted to pH 4.0 with phosphoric acid and added to the reactor. Charge B was then added at 200 rpm agitation, the jacket control set to 50 °C and equilibrated. At 40 °C, the reactor was pressurized with ethylene to 680 psi and equilibrated at this temperature for 15 minutes. At the end of the equilibration period, charges C and D were started and added uniformly over a 4 hour period. After initiation, the bath temperature was raised to 65 °C and the reaction temperature was allowed to increase to 82 °C. After the addition was complete, the reactants were cooled to 50 °C and charges E and F were added. Thirty minutes later, the mixture was cooled and discharged. The physical properties of the emulsion is described in Table 1 as emulsion 1.

The procedure was then repeated using different types of colloids and water soluble monomers. The emulsions produced were designated emulsions 2 to 6 and are reported in Table 1 along with a comparative sample, emulsion 7c, which has no water soluble monomer present. This comparative sample shows that while an emulsion with good high solids was obtained, an extremely high and undesirable viscosity level of 38,000 cps was also obtained. Since it is difficult to determine the precise amount of ethylene present in the copolymer, the ethylene present in the compositions identified in Table 1 is defined in terms of the Tg of the final copolymer as well as the pressure of the ethylene charge. Normally, a -15 °C Tg corresponds to approximately 25-30% ethylene.

A modified semi-batch or slow addition procedure was followed for two additional emulsions. In emulsion 8, 50% of the vinyl acetate was charged initially and the remaining 50% added gradually throughout the polymerization reaction. In emulsion 9, 50% of the acrylamide was charged initially and the balance added gradually throughout the polymerization reaction. The results for these emulsions are also reported in Table 1.

## EXAMPLE 2

This example illustrates the process of preparing a polyvinyl alcohol stabilized/water soluble vinyl polymerizable monomer, vinyl acetate-ethylene emulsion. The reaction was carried out in a 10 liter stainless steel reactor and the following charges were prepared:

(A) 478 g low MW polyvinyl alcohol (24.4%); 409 g medium MW polyvinyl alcohol (9.5%); 21.6 g Triton X-405(70%); 1.7 g sodium acetate; 2.5 g sodium formaldehyde sulfoxylate; 72 g acrylamide (50%); 3.6 g mercapto acetic acid; 8 g Tamol 850 (25%); 10.8 g $FeSO_4$ $7H_2O$ (1%) and 1050 g water;
(B) 3600 g vinyl acetate;
(C) 8.4 g t-butyl hydrogen peroxide, 312 g water;
(D) 8.4 g sodium formaldehyde sulfoxylate, 312 g water;
(E) 5 g t-butyl hydrogen peroxide, 5 g water
(F) 5 g sodium formaldehyde sulfoxylate, 50 g water.

The process of preparation is exactly the same as that described above for emulsion 1 in Example 1 with the results reported in Table 1 as emulsion 10.

## EXAMPLE 3

The same charges and procedure as described in Example 2 were followed except that 900 g Natrosol 250 LR(10%), an hydroxyethyl cellulose colloid was used instead of polyvinyl alcohol, 1.0 g sodium acetate instead of 1.7 g and 700 g of water instead of 1050 g, all in charge A. The prepared emulsion is reported in Table 1 as emulsion 11.

## EXAMPLE 4

This example illustrates the process of preparing a polyvinyl alcohol stabilized/acrylic acid, vinyl

acetate-ethylene emulsion. The following charges were prepared:

(A) 144 g low MW polyvinyl alcohol (25%), (88% hydrolyzed); 360 g low MW polyvinyl alcohol (10%), (100% hydrolyzed); 43.2 g Triton X-405 (70%); 45 g Triton X-100; 450 g Triton X-301 (20%); 1.7 g sodium acetate; 2.5 g sodium formaldehyde sulfoxylate; 24 g acrylic acid; 3.6 g mercaptoacetic acid; 8 g Tamol 850 (25%); 10.8 g $FeSO_4$ $7H_2O$ (1%); 950 g water and 10 g KOH (45%);

(B) 3600 g vinyl acetate;

(C) 8.4 g t-butyl hydrogen peroxide, 250 g water;

(D) 8.4 g sodium formaldehyde sulfoxylate, 312 g water;

(E) 5 g t-butyl hydrogen peroxide, 5 g water;

(F) 5 g sodium formaldehyde sulfoxylate, 50 g water;

The process of preparation is exactly the same as that described above for emulsion 1 in Example 1 with the results reported in Table 1 as Emulsion 12.

TABLE 1

| | Water Soluble Monomer | | Colloid | | Chain Transfer Agent | | | | | |
|---|---|---|---|---|---|---|---|---|---|---|
| Emulsion | %* | Type | %* | Type | %* | Type | Process Type | Tg °c | Solids | Viscosity CPS |
| 1 | 1.0 | AM(2) | 6 | OSA-St(1) | 0.1 | MCA(3) | Batch | -6 | 65.4 | 870 |
| 2 | 1.0 | AM(2) | 6 | OSA-St(1) | --- | ------ | Batch | -4 | 65.0 | 2220 |
| 3 | 1.0 | HEA(4) | 6 | OSA-St(1) | 0.1 | MCA(3) | Batch | -5 | 65.6 | 1112 |
| 4 | 0.5 | SVS(5) | 6 | OSA-St(1) | 0.1 | MCA(3) | Batch | -13 | 64.6 | 694 |
| 5 | 1.0 | AM(2) | 6 | OSA-St(1) | 0.1 | MCE(6) | Batch | -2 | 65.1 | 4210 |
| 6 | 1.0 | AM(2) | 6 | OSA-St(1) | 0.1 | DDM(7) | Batch | -2 | 66.2 | 1084 |
| 7c | --- | ----- | 6 | OSA-St(1) | 0.1 | MCA(3) | Batch | -- | 64.6 | 38000 |
| 8 | 1.0 | AM(2) | 6 | OSA-St(1) | 0.1 | MCA(3) | Slow Addition | 0 | 66.0 | 1795 |
| 9 | 1.0 | AM(2) | 6 | OSA-St(1) | 0.1 | MCA(3) | Slow Addition | -4 | 63.7 | 298 |
| 10 | 1.0 | AM(2) | 3.2<br>1.1 | PVA(8)<br>PVA(9) | 0.1 | MCA(3) | Batch | 1 | 63.8 | 1760 |
| 11 | 1.0 | AM(2) | 2.5 | HEC(10) | 0.1 | MCA(3) | Batch | -- | 65.7 | 2385 |
| 12 | 0.7 | AA(12) | 1.0<br>1.0 | PVA(8)<br>PVA(11) | 0.1 | MCA(3) | Batch | -- | 60.7 | 210 |

(1) Acid converted amioca starch to 85WF
(2) acrylamide
(3) mercaptoacetic acid
(4) hydroxyethyl acrylate
(5) sodium vinyl sulfonate
(6) mercapto ethanol
(7) dodecyl mercaptan
(8) low MW polyvinyl alcohol, 88% hydrolyzed
(9) medium MW polyvinyl alcohol, 88% hydrolyzed
(10) hydroxyethyl cellulose
(11) low MW polyvinyl alcohol, 100% hydrolyzed
(12) acrylic acid
* wt. % based on wt. of vinyl acetate

## Claims

1. A process for preparing a high solids emulsion comprising polymerizing at least 50% by weight of vinyl acetate based on the weight of polymer, with ethylene in the presence of a protective colloid and a water soluble, vinyl polymerizable monomer of the formula:

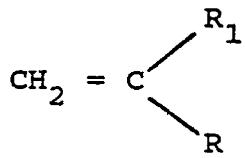

where R is selected from the group consisting of $-CONHA$, $-COO(CH_2)_zOH$, $-COOH$,

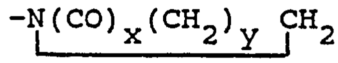

and $-SO_3Na$; x is 0 or 1; y is 2 to 4; z is 2 or 3; A is H, $-CH_2OH$ or $-C(CH_3)_2CH_2SO_3H$ or its neutralized salt; and $R_1$ is hydrogen or $CH_3$; and a free radical catalyst to provide an emulsion polymer having a solid content of at least 60% by weight.

2. The process of claim 1 wherein from about 0.3 to 5% by weight of said vinyl polymerizable monomer, based on the weight of polymer, is used.

3. The process of Claim 2 wherein said protective colloid is selected from the group consisting of hydrophobically modified starch, cellulose ethers and polyvinyl alcohol and said emulsion polymer has a viscosity of less than 5000 cps.

4. The process of Claim 3 wherein said protective colloid is an alkenyl succinate modified starch having an hydrocarbon chain of at least 5 carbon atoms.

5. The process of Claim 3 wherein an effective amount of chain transfer agent is used and said vinyl polymerizable monomer has R selected from the group consisting of $-CONH_2$, $-COOCH_2CH_2OH$ and $-SO_3Na$ and $R_1$ is hydrogen.

6. The process of Claim 5 wherein from about 1 to 10% by weight of said protective colloid, based on the weight of polymer, is used, said protective colloid being an alkenyl succinate modified starch having an hydrocarbon chain of at least 5 carbon atoms and wherein from about 65 to 95% by weight of vinyl acetate, from about 5 to 35% by weight of ethylene and from about 0.5 to 2% by weight of said vinyl polymerizable monomer is used, all weights based on weight of polymer.

7. The process of Claim 6 wherein said vinyl polymerizable monomer is acrylamide and said alkenyl succinate modified starch is waxy maize or tapioca and has a water fluidity within the range of 20 to 100.

8. The process of Claim 7 wherein from about 70 to 90% by weight of vinyl acetate and from about 10 to 30% by weight of ethylene are used.

9. A high solids emulsion polymer comprising at least 50% by weight of vinyl acetate and from about 5 to 49% by weight of ethylene and having a solids content of at least 60% by weight, said polymer being prepared by emulsion polymerization employing a protective colloid, from about 0.3 to 5% by weight of a water soluble, vinyl polymerizable monomer of the formula:

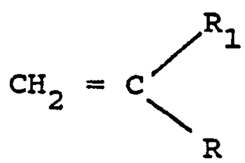

where R is selected from the group consisting of $-CONHA$, $-COO(CH_2)_zOH$, $-COOH$,

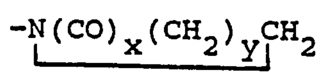

and $-SO_3Na$; x is 0 or 1; y is 2 to 4; z is 2 or 3; A is H, $-CH_2OH$ or $-C(CH_3)_2CH_2SO_3H$ or its neutralized salt; and $R_1$ is hydrogen or $CH_3$, and a free radical catalyst, said weights based on the weight of polymer.

10. The emulsion polymer of Claim 9 wherein said protective colloid is selected from the group consisting of hydrophobically modified starch, cellulose ethers and polyvinyl alcohol, and said emulsion polymer has a viscosity of less than 5000 cps.

11. The emulsion polymer of Claim 10 wherein said vinyl polymerizable monomer has R selected from the group consisting of $-CONH_2$, $-COOCH_2CH_2OH$ and $-SO_3Na$ and $R_1$ is hydrogen and wherein an effective amount of chain transfer agent is used.

12. The emulsion polymer of Claim 11 wherein from about 1 to 10% by weight of said protective colloid, based on the weight of polymer, is used and is an alkenyl succinate modified starch having an hydrocarbon chain of at least 5 carbon atoms and wherein from about 65 to 95% by weight of vinyl acetate, from about 5 to 35% by weight of ethylene and from about 0.5 to 2% by weight of said vinyl polymerizable monomer.

13. The emulsion polymer of Claim 12 wherein said vinyl polymerizable monomer is acrylamide and wherein said alkenyl succinate modified starch is waxy maize or tapioca and has a water fluidity within the range of 20 to 100.

14. The emulsion polymer of Claim 13 having from about 70 to 90% by weight of vinyl acetate, from about 10 to 30% by weight of ethylene and having a solids content of at least 65% by weight and a viscosity of less than 2500 cps.